# FASCICULE DE BREVET EUROPEEN

(11) **EP 2 896 116 B1**
(45) Date de publication et mention de la délivrance du brevet: **26.01.2022**
(21) Numéro de dépôt: 13756617.0
(22) Date de dépôt: 29.07.2013
(51) Int. Cl.: H02K 3/52, H02K 11/00, H02K 3/28

(54) **ISOLANT DE BOBINE APTE A RECEVOIR UN CAPTEUR DE TEMPERATURE, INTERCONNECTEUR POUR STATOR ET SUPPORT POUR CAPTEUR DE TEMPERATURE CORRESPONDANTS**
SPULENISOLIERER ZUR AUFNAHME EINES TEMPERATURSENSORS UND ENTSPRECHENDER STATORVERBINDER SOWIE LAGER FÜR DEN TEMPERATURSENSOR
COIL INSULATOR CAPABLE OF RECEIVING A TEMPERATURE SENSOR, AND CORRESPONDING STATOR INTERCONNECTOR AND BEARING FOR TEMPERATURE SENSOR

(30) Priorité: 17.09.2012 FR 1258680
(43) Date de publication de la demande: 22.07.2015
(73) Titulaire: Valeo Equipements Electriques Moteur, 94046 Créteil Cedex (FR)
(72) Inventeur: BADEY, Jean-Philippe, 62630 Etaples (FR); CAMBRONNE, Olivier, 62780 Cucq (FR); SELOSSE, Didier, 62520 Le Touquet (FR); WOLFF, Pawel, 43-300 Bielsko-Biala (PL); KALARY-PABICH, Magdalena, 43-384 Jaworze (PL); EL BARAKA, Kadija, 77600 Bussy St Georges (FR); JUGOVIC, Svetislav, 91260 Juvisy-sur-Orge (FR)
(74) Mandataire: Valeo Powertrain Systems
(86) Numéro de dépôt international: PCT/FR2013/051823
(87) Numéro de publication internationale: WO 2014/041265

(56) Documents cités:
- EP-A2- 1 096 642
- EP-A2- 1 168 570
- DE-A1- 3 625 109
- JP-A- 2010 213 392
- US-A1- 2012 112 581

## Description

### DOMAINE TECHNIQUE DE L'INVENTION

L'invention concerne un isolant de bobine pour une machine électrique apte à recevoir un capteur de température, l'interconnecteur pour le stator ainsi que le support pour le capteur de température correspondant.

L'invention se rapporte au domaine des machines électriques telles que les moteurs, les alternateurs, ou les alterno-démarreurs.

L'invention trouve une application particulièrement avantageuse avec les alternateurs utilisés dans des systèmes dits "range-extender" destinés à augmenter l'autonomie des véhicules électriques. Ces systèmes comportent à cet effet un moteur thermique de faible puissance entraînant mécaniquement en rotation l'alternateur destiné à fournir, quand cela est nécessaire, de l'énergie électrique à des batteries d'alimentation d'un moteur électrique de traction du véhicule.

### ETAT DE LA TECHNIQUE

On connaît des machines électriques comportant un stator et un rotor solidaire d'un arbre. Le rotor pourra être solidaire d'un arbre menant et/ou menée et pourra appartenir à une machine électrique tournante sous la forme d'un alternateur comme décrit dans le document EP 0 803 962 ou d'un moteur électrique comme décrit dans le document EP 0 831 580.

La machine électrique comporte un boîtier portant le stator. Ce boîtier est configuré pour porter à rotation l'arbre par exemple par l'intermédiaire de roulements, tel que des roulements à billes et/ou à aiguilles. Le rotor pourra comporter un corps réalisé en tôle feuilletée, qui comporte des logements. Des aimants permanents sont positionnés à l'intérieur d'au moins certains de ces logements comme visible par exemple dans les figures 1 et 2 du document EP0 80 3962.

Comme décrit dans le document FR2 890 798 auquel on se reportera pour plus de précisions, la machine comporte un rotor à griffes et un corps de stator sous la forme d'un paquet de tôles doté de dents pour le montage de bobines appartenant au bobinage du stator. Le corps du stator comporte des encoches ouvertes vers l'intérieur délimitées chacune par deux dents consécutives. Ces dents sont à bords parallèles, une bande de matière, appelée culasse existant entre le fond des encoches et la périphérie externe du corps. Dans ce document la machine électrique est polyphasée et comporte un bobinage de stator comportant plusieurs bobines préformées. Plus précisément on monte sur les dents du corps du stator les bobines préformées réalisées à partir d'un fil enroulé sur plusieurs tours. Les fils consistent par exemple en un fil de cuivre revêtu d'émail.

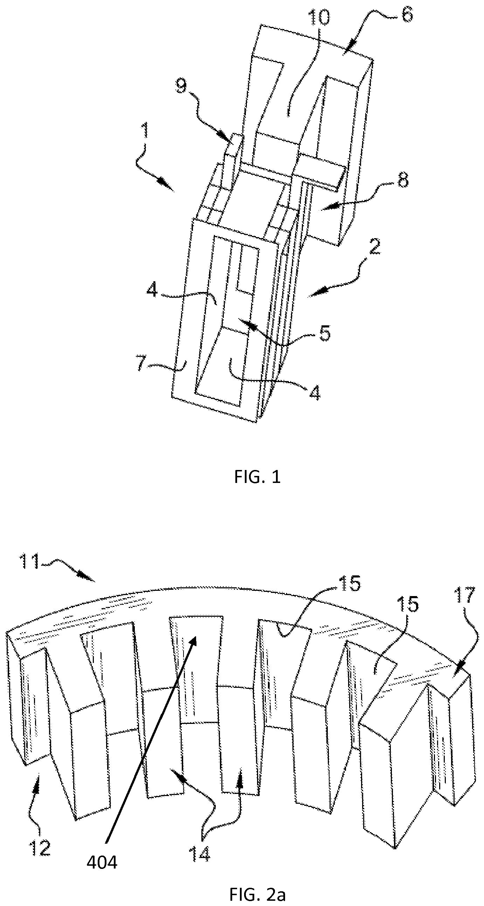

Comme cela est visible sur la figure 1, chaque bobine est montée autour d'un isolant d'encoche 1 électriquement isolant ayant un corps 2 comportant des parois 4 délimitant un cadre 5 de forme globalement rectangulaire. Le corps 2 de l'isolant comporte en outre un rebord avant 7 et un rebord arrière 8 définissant avec les parois 4 du cadre 5 une gorge de montage d'une bobine 9. Le rebord arrière 8 est destiné à être positionné à proximité de la culasse 6 tandis que le rebord avant 7 est situé du côté intérieur de la machine électrique. L'ensemble est destiné à être enfilé autour de la dent 10.

Dans une forme de réalisation, deux bobines sont implantées dans une même encoche, chaque bobine étant enroulée autour de l'une des dents délimitant l'encoche par l'intermédiaire d'un isolant de bobine.

Les bobines sont interconnectées entre elles, par exemple par soudure ou à l'aide d'un interconnecteur pour former une phase de la machine qui pourra être du type polyphasé.

D'après le document US5343613, il est connu d'implanter un capteur de température à l'intérieur de la machine. Ce capteur est relié à l'étage de puissance comportant l'onduleur et l'étage de commande, comme cela est décrit par exemple dans le document EP0 831 580. L'étage de commande coupe d'alimentation de la machine électrique en cas de détection d'une surchauffe pour éviter son endommagement. D'autres exemples d'art antérieur sont JP 2010 213392 et DE 36 25 109 A1.

### OBJET DE L'INVENTION

L'invention vise à tirer partie de l'isolant de bobine pour faciliter l'implantation du capteur de température à l'intérieur de la machine électrique.

A cet effet, l'invention a pour objet un isolant de bobine destiné à être positionné autour d'une dent d'un stator d'une machine électrique, cet isolant de bobine ayant un corps comportant des parois formant un cadre ainsi qu'un rebord avant et un rebord arrière définissant avec des parois du cadre une gorge de montage pour l'enroulement d'une bobine, dans lequel l'isolant comporte une patte (301) souple creuse portée par un des rebords de l'isolant de bobine, cette patte (301) délimitant un logement (302, 331') destiné à recevoir un capteur (303) de température, la patte (301) exerçant une action élastique contre le capteur (303) de température de manière à le maintenir en contact avec la bobine.

Du fait de la souplesse de la patte, le logement est souple et le capteur de température est encliqueté dans le logement.

Selon une réalisation, la patte est reliée élastiquement au rebord par une bande de matière d'épaisseur réduite comparée à l'épaisseur du rebord.

Selon une réalisation, des rainures sont ménagées autour de la patte.

Selon une réalisation, la patte comporte un trou apte à recevoir un outil permettant d'écarter la patte de la bobine pour l'implantation du capteur de température dans le logement.

Selon une réalisation, le trou est borgne.

Selon une réalisation, la patte comporte un trou destiné à recevoir le capteur de température surmoulé sur un support apte à être fixé sur le stator.

Selon une réalisation, la patte comporte une protubérance pour permettre un déplacement manuel de ladite patte.

Selon une réalisation, l'isolant de bobine comporte en outre au moins une ailette pliable par rapport au corps apte à assurer une isolation électrique entre deux bobines montées sur deux dents adjacentes, cette ailette étant située dans le prolongement d'un des rebords.

Selon une réalisation, le rebord avant comporte deux bordures longitudinales configurées chacune à une de leurs extrémités pour assurer un guidage d'une extrémité d'un fil de la bobine.

Selon une réalisation, l'isolant de bobine comporte en outre un talon situé dans le prolongement du rebord arrière destiné à être plaqué contre un fond d'une encoche du stator.

Selon une autre réalisation non couverte par l'invention, le logement est formé par une cavité qui est aménagée sur un des rebords de l'isolant de bobine, ladite cavité ayant des parois rigides.

Cette cavité avec des parois rigides permet une protection du capteur de température.

Selon une caractéristique de cette autre réalisation non couverte par l'invention, la cavité est remplie de résine ou de colle conductrice thermiquement avant de recevoir ledit capteur.

Cette résine ou cette colle conductrice permet en association avec les parois rigides de la cavité un maintien et un positionnement idéal du capteur de température. Le capteur de température peut ainsi résister aux vibrations.

Selon une caractéristique de cette autre réalisation non couverte par l'invention, au moins une paroi de la cavité forme une barrière électrique pour isoler électriquement le capteur de température de l'enroulement du stator.

Selon une caractéristique de cette autre réalisation non couverte par l'invention, l'isolant de bobine comprend une périphérie interne du côté de l'axe du stator, ladite cavité est aménagée sur un des rebords de la périphérie interne de l'isolant de bobine.

En général sur la périphérie interne du stator, située du côté de l'axe X se trouve un circuit de refroidissement à eau. Si l'on place le capteur de température sur la périphérie externe de l'isolant, c'est-à-dire du côté de la périphérie interne du stator et du circuit de refroidissement les températures mesurées par le capteur de température risquent d'être inférieures à celles qui seraient mesurées à d'autres endroits de l'isolant du fait de la présence de ce circuit de refroidissement. Il y a donc un risque de sous évaluation de la température du bobinage. Au contraire, en plaçant comme cela est prévu ci-dessus, le capteur de température du côté interne de l'isolant de bobine on évite tout risque de sous évaluation de température.

En tant qu'exemple, la description concerne également un ensemble d'isolants de bobine qui comprend au moins deux isolants de bobine tel que définis précédemment, lesdits logements desdits au moins deux isolants de bobine étant destinés à être remplis d'un certain nombre de capteurs de température, ledit nombre étant tel qu'au moins un des logements ne soit pas pourvu d'un capteur de température. Ainsi au cours du montage, dans le cas d'un capteur de température défectueux, il reste un logement pour monter un nouveau capteur de température. Le changement d'un capteur de température est alors très simple puisqu'il suffit de mettre un capteur de température dans le logement laissé libre.

Selon un exemple, l'ensemble d'isolants de bobine qui comprend au moins deux isolants de bobine tel que définis précédemment, est destiné à recevoir un moins deux capteurs de température.

Ainsi, on augmente la fiabilité de la mesure de température d'une part, puisque si un capteur ne marche plus on aura toujours une information de température des autres ou de l'autre capteur et d'autre part, on augmente la précision puisqu'on a deux mesures de température à deux endroits différents du chignon.

En tant qu'exemple, la description a également pour objet un interconnecteur pour stator de machine électrique polyphasée comprenant un bobinage doté de plusieurs bobines et d'un neutre, caractérisé en ce qu'il comporte au moins quatre cadres de forme annulaire empilés axialement les uns sur les autres et isolés entre eux, chaque cadre portant sur sa périphérie interne des pattes s'étendant en saillie vers l'intérieur du cadre pour le soudage d'extrémités de bobines du stator, et en ce qu'il comporte en outre un élément de maintien pour un capteur de température surmoulé sur un support comportant un système d'encliquetage destiné à coopérer avec ledit élément de maintien.

En tant qu'exemple, l'élément de maintien est positionné sur la périphérie interne de l'interconnecteur.

En tant qu'exemple, l'élément de maintien délimite une ouverture de forme oblongue.

En tant qu'exemple, la description concerne également un support pour capteur de température, caractérisé en ce qu'il comporte une première branche portant un capteur surmoulé et une deuxième branche portant un système d'encliquetage destiné à coopérer avec l'élément de maintien de l'interconnecteur selon l'invention, ces deux branches étant reliées l'une à l'autre par une troisième branche dite branche de liaison.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.

Les exemples de la description suivante qui ne sont pas couverts par les revendications sont considérés comme ne faisant pas partie de la présente invention.
La figure 1, déjà décrite, montre un isolant de bobine selon l'état de la technique destiné à être monté autour d'une dent d'un stator;
Les figures 2a et 2b montrent respectivement des vues en perspective d'un stator seul et d'un stator bobiné muni d'un interconnecteur selon l'invention ;
La figure 2c montre une vue détaillée des connexions entre une bobine du stator et l'interconnecteur selon l'invention;
Les figures 3a à 3c montrent respectivement des vues en perspective de dessus et de dessous de l'interconnecteur selon l'invention;
La figure 4 représente, suivant une vue en perspective, un cadre de phase de l'interconnecteur selon l'invention;
La figure 5 montre une vue en perspective d'un empilement des cadres formant l'interconnecteur selon l'invention;
La figure 6 montre une vue en coupe transversale de l'empilement des cadres de l'interconnecteur selon l'invention;
La figure 7 représente, suivant une vue en perspective détaillée, une patte de connexion de l'interconnecteur selon l'invention;
La figure 8 montre, suivant une vue en perspective, le détail de la liaison entre un pion d'indexage de l'interconnecteur selon l'invention avec un système de guidage d'isolant de bobine;
La figure 9 montre, suivant une vue en perspective, un isolant de bobine destiné à être monté sur les dents du stator selon l'invention.
Les figures 10a et 10b montrent des vues en perspective et en coupe transversale d'un isolant de bobine selon l'invention muni d'une patte délimitant un logement destiné à recevoir un capteur de température;
Les figures 11a et 11b montrent deux modes de réalisation permettant d'obtenir un effet élastique pour une patte munie d'un trou pour l'insertion d'un outil de montage;
Les figures 12a et 12b montrent les étapes permettant le positionnement du capteur de température dans le logement de la patte à l'aide de l'outil de montage;
Les figures 13a à 13c montrent des vues en perspective correspondant à un mode de réalisation dans lequel le capteur de température est surmoulé sur un support fixé sur l'interconnecteur.
Les figures 14 à 17 illustrent un autre mode de réalisation dans lequel le logement est formé par une cavité.
Les éléments identiques, similaires ou analogues conservent la même référence d'une figure à l'autre.

### DESCRIPTION D'EXEMPLES DE REALISATION DE L'INVENTION

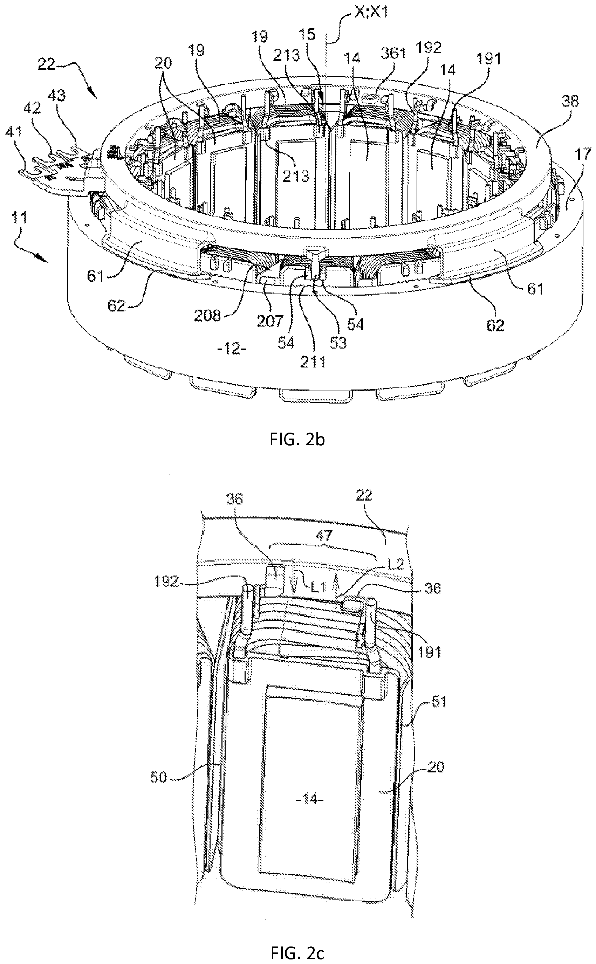

Les figures 2a et 2b montrent un stator 11 d'axe X ayant un corps 12 comportant des dents 14 réparties régulièrement sur la périphérie interne ainsi que des encoches 15 ouvertes vers l'intérieur, deux encoches 15 consécutives étant séparées par une dent 14. Ces dents 14 sont à bords parallèles deux à deux, une bande de matière, correspondant à la culasse 17 existant entre le fond des encoches 15 et la périphérie externe du corps 12. Le corps 12 est formé par un empilement de tôles réalisées en matière ferromagnétique s'étendant dans un plan radial perpendiculaire à l'axe X. Le paquet de tôles est maintenu au moyen de rivets (non représentés) traversant axialement de part en part l'empilement des tôles. Le stator 11 a une périphérie interne 404.

Le stator appartient à une machine électrique tournante polyphasée comportant un bobinage de stator doté de plusieurs bobines 19, ici préformées, et d'un point neutre, dit neutre de la machine, visible par exemple à la figure 1 du document EP 0 831 580. Les bobines 19 sont interconnectées entre elles à l'aide d'un interconnecteur 22 compact comportant plusieurs cadres 31-34 dont l'un 31, dit cadre de neutre 31 est relié au neutre de la machine électrique tournante.

Plus précisément comme cela est visible sur la figure 2b, on monte sur les dents 14 du stator les bobines 19 préformées formant le bobinage du stator 11. Ces bobines 19 sont réalisées à partir d'un fil enroulé sur plusieurs tours. Les fils consistent en un fil électriquement conducteur, par exemple en un fil de cuivre et/ou d'aluminium, revêtu d'un isolant électrique, tel que de l'émail. Les fils peuvent être de section circulaire, rectangulaire ou en forme de méplat.

Dans une forme de réalisation, deux bobines 19 sont implantées dans une même encoche 15, chaque bobine 19 étant enroulée autour de l'une des dents 14 métallique délimitant l'encoche par l'intermédiaire d'un isolant de bobine 20 Cet isolant 20 est un isolant électrique réalisé dans ce mode de réalisation en matière électriquement isolante et moulable. Les extrémités 191, 192 de chaque bobine 19 dépassent axialement du bobinage d'un même côté du stator 11 correspondant sur la figure 2b au côté supérieur du stator 11. De préférence, les extrémités 191, 192 des bobines 19 sont situées sensiblement suivant une même circonférence du côté de l'extrémité libre des dents 14, c'est-à-dire du côté éloigné de la culasse 17 et du côté le plus proche de l'entrefer entre la périphérie interne du stator et la périphérie externe du rotor que comporte la machine électrique. Chaque bobine 19 comporte une première extrémité 191 appelée "entrée" destinée à être connectée avec les autres entrées de manière alternée pour appartenir à une des phases U, V, W de la machine et une deuxième extrémité 192 appelée "sortie" destinée à être reliée au neutre de la machine électrique. A cet effet, les bobines 19 sont interconnectées entre elles pour former les différentes phases U, V, W à l'aide de l'interconnecteur 22 d'axe X1 confondu avec l'axe X lorsque l'interconnecteur 22 est installé sur le stator 11.

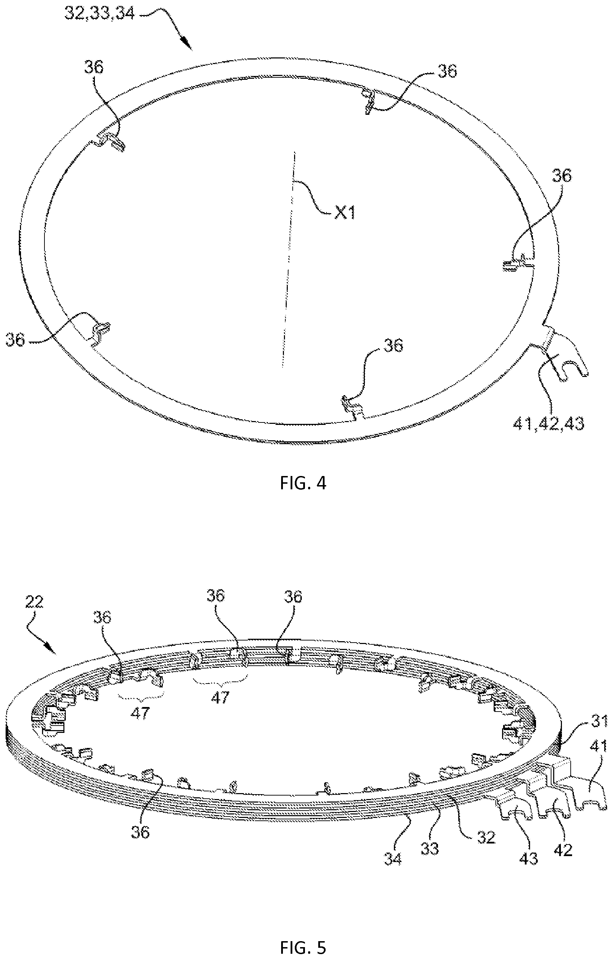

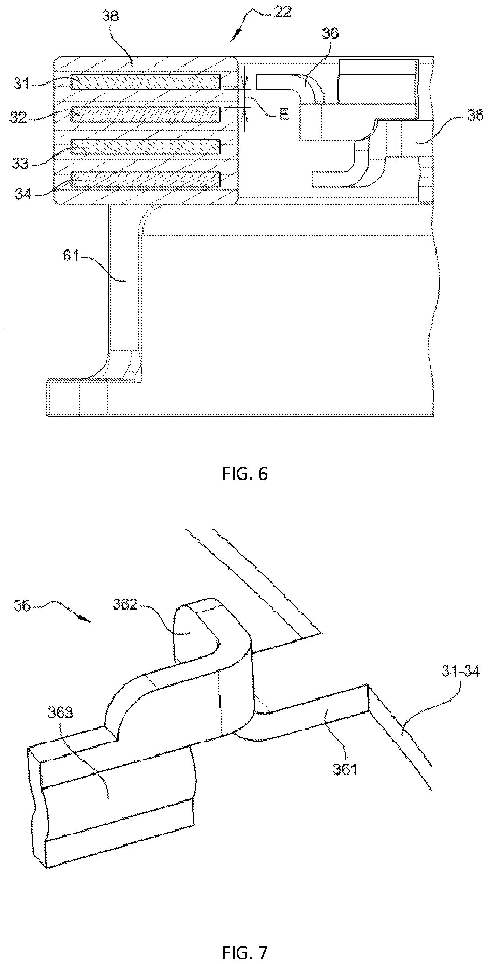

Plus précisément, comme cela est visible sur les figures 5 et 6, l'interconnecteur 22 comporte quatre cadres 31-34 de forme annulaire s'étendant suivant un plan radial. Les cadres 31-34 sont électriquement conducteurs en étant par exemple en cuivre ou avantageusement en un autre matériau métallique soudable. Ces cadres 31-34 ont des diamètres internes et externes sensiblement identiques. Le diamètre externe des cadres 31-34, correspondant sensiblement au diamètre externe de l'interconnecteur 22, est inférieur au diamètre externe du stator 11, constitué par le diamètre externe de la culasse 17, pour faciliter une opération d'imprégnation des bobines 19 et réduction de l'encombrement diamétral. Ces cadres 31-34 sont empilés axialement les uns sur les autres et isolés électriquement entre eux. Chaque cadre 31-34 porte sur sa périphérie interne des pattes 36 apparentes s'étendant en saillie radiale vers l'intérieur du cadre pour le soudage des extrémités 191, 192 des bobines du stator. De préférence, les cadres 31-34 sont noyés dans un corps 38 réalisé en matériau électriquement isolant, tel que de la matière plastique. Une couche de matière électriquement isolante 38 est présente entre chaque cadre comme visible par exemple à la figure 6.

Un des cadres 31, dit cadre neutre, est destiné à être relié au neutre du bobinage de la machine électrique comprenant les bobines 19 agencés ici selon un montage en étoile avec un point neutre constitué à la faveur du cadre 31. Ce cadre de neutre 31 est situé à une extrémité de l'empilement des cadres 31-34, ici à l'extrémité la plus éloignée de la culasse 17. Etant donné que chaque bobine 19 a une extrémité de sortie 192 reliée au neutre, le cadre 31 de neutre comporte un nombre de pattes 36 égal au nombre de bobines 19, en l'occurrence égal à 15.

Les trois autre cadres 32-34, dit cadres de phase, sont destinés à être reliés chacun aux entrées 191 des bobines 19 de la phase U, V, W concernée la machine électrique, ici de type triphasée. Les extrémités d'entrée 191 des bobines 19 sont ainsi alternativement reliées circonférentiellement aux sorties de phase du bobinage de la machine électrique par l'intermédiaire d'un des cadres 32-34 de phase de l'interconnecteur 22. Les cadres de phase comporte chacun un nombre de pattes égal au nombre de bobines divisé par le nombre de phases de la machine, soit ici 15/3=5 (cf. figure 4). Plus précisément chaque phase comporte cinq bobines 19 reliées électriquement entre elles par l'un des cadres 32-34, dont le nombre de pattes 36 est égal à cinq.

A cet effet, comme montré sur les figures 2b, 3a, 3b et 3c, 4 et 5, chaque cadre 32-34 de phase comporte sur sa périphérie externe un terminal 41-43 de connexion pour l'interconnexion avec un connecteur de puissance (non représenté) lui-même relié à un onduleur décrit par exemple dans le document EP 0 831 580. Ces terminaux 41-43 de connexion placés côte à côte présentent une extrémité en forme de U et constituent les sorties des phases du bobinage à bobines 19 de la machine. On appréciera que les terminaux 41-43 sont simplifiés par rapport aux terminaux décrits dans le document US 2005/0253466 du fait qu'ils font partie des cadres 32-34. Ces terminaux 41-43 sont rigides et d'un encombrement réduit.

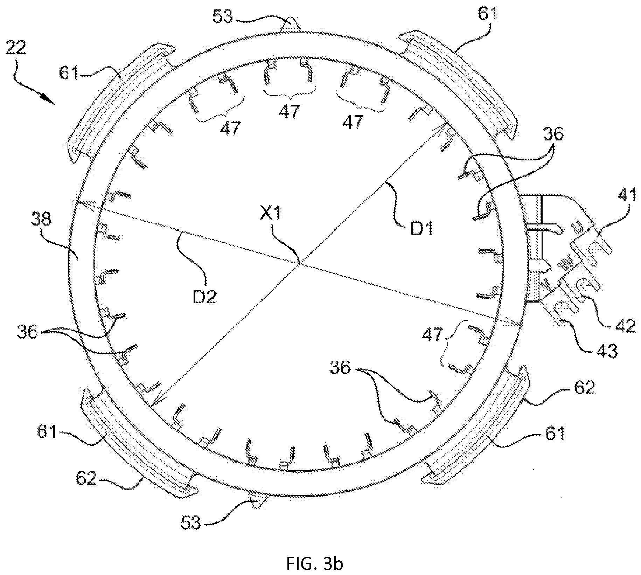

Les pattes 36 des différents cadres 31-34 sont décalées angulairement les unes par rapport aux autres. En outre, pour avoir suffisamment de place pour pincer une patte 36 et une extrémité 191, 192 d'une bobine 19 à l'aide d'une électrode de soudage, un ensemble 47, formé par une patte 36 d'un des cadres de phase 32-34 et une patte 36 du cadre de neutre 31 destinées à être soudées sur les extrémités 191, 192 d'une même bobine 19, est configuré de manière à être positionné entre les côtés 50, 51 de ladite bobine 19 s'étendant entre les extrémités axiales de la bobine 19 (cf. figures 2c et 3b). Plus précisément les pattes 36 de l'ensemble 47 sont en contact avec les zones en vis-à-vis des extrémités 191, 192 comme mieux visible à la figure 2c. On notera que les extrémités 191, 192 sont décalées l'une vers l'autre.

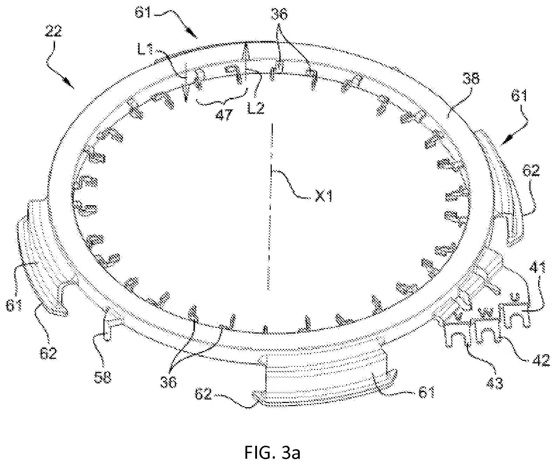

Par ailleurs, comme cela est visible sur les figures 2c et 3a, le cadre de neutre 31 étant situé à une extrémité de l'empilement des cadres 31-34, les pattes 36 du cadre de neutre 31 sont dirigées, suivant une direction axiale, dans un sens inverse par rapport aux pattes 36 des cadres de phase 32-34, de sorte que toutes les pattes 36 de l'interconnecteur 22 se situe à la même hauteur que les extrémités 191, 192 de bobine. En effet, les pattes 36 du cadre de neutre 31 sont dirigées suivant la direction axiale référencée L1; tandis que les pattes 36 des cadres de phase sont dirigées suivant la direction axiale opposée référencée L2. Une telle configuration qui limite la distance entre les pattes 36 de l'interconnecteur 22 et les extrémités des bobines 19 permet de réduire la longueur des fils du bobinage.

Dans un mode de réalisation présenté sur la figure 7, chaque patte 36 comporte une portion en forme de L ayant un premier bras 361 issu de la périphérie interne d'un cadre 31-34 qui s'étend vers l'intérieur du cadre 31-34 et un deuxième bras 362 perpendiculaire au premier bras 361. La patte 36 comporte également une tête 363 sur laquelle est soudée l'extrémité 191, 192 d'une bobine 19. Cette tête 363 reliée à un des bords du deuxième bras 362 présente une forme bombée creuse. La portion en L des pattes 36 du cadre de neutre 31 est pliée dans un sens inverse par rapport aux portions en L des pattes 36 des cadres de phase 32-34. De préférence, dans un ensemble 47 de deux pattes 36 destinées à être reliée à une entrée 191 et une sortie 192 d'une même bobine 19, les parties creuses des têtes 363 de ces deux pattes 36 sont tournées l'une vers l'autre.

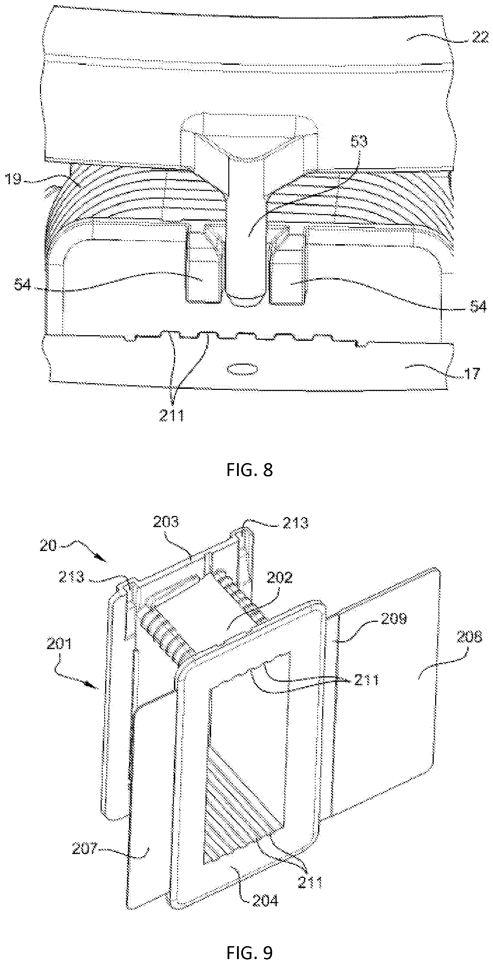

Par ailleurs, comme montré sur les figures 2b, 3a, 3b, 3c et 8, l'interconnecteur 22 comporte des pions 53 permettant, lors du montage, l'indexage de l'interconnecteur 22 par rapport aux bobines 19 afin de réduire les risques de mauvaises connexions entre les bobines. Ces pions d'indexage 53 d'extension axiale sont portés par une périphérie externe de l'interconnecteur 22. Suivant une réalisation, ces pions 53 comportent une base venant de matière avec la périphérie externe de l'interconnecteur 22 portant une tige 58 de forme sensiblement cylindre ayant une extrémité libre biseautée. Ces pions d'indexage 53 sont destinés à coopérer avec des systèmes de guidage portés par les isolants de bobine 20. Comme cela est visible sur les figures 2b et 8, ces systèmes de guidage sont formés par des protubérances 54 définissant un passage pour un pion d'indexage 53. Pour faciliter l'insertion des pions 53 d'indexage entre les protubérances 54, les protubérances 54 sont conformées d'une manière telle que le passage présente une forme légèrement évasée à son extrémité débouchant du côté des extrémités 191, 192 du fil de la bobine 19. En l'occurrence, l'interconnecteur 22 comporte deux pions d'indexage 53.

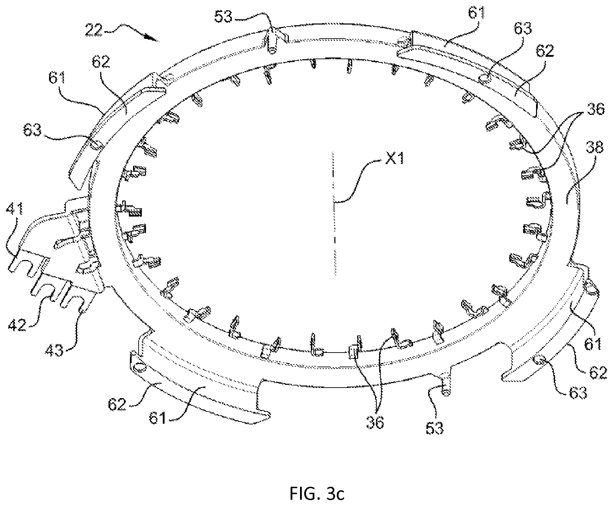

Comme cela est visible sur les figures 2b, 3a, 3b, et 3c, l'interconnecteur 22 comporte également des pieds d'appui 61 destinés à reposer sur un rebord de la culasse 17 du stator 11. Ces pieds d'appui 61 présentent une forme en L avec une extrémité fixée à la périphérie externe du corps 38 et une extrémité terminée par un support 62 en appui sur le rebord de la culasse 17. Le support 62 comporte des creux 63 visibles sur la figure 3c destinés à recevoir des extrémités des tirants de fixation du stator.

Les pieds d'appui 61 sont ici au nombre de quatre répartis de manière régulière autour du corps 38. Deux pieds d'appui 61 successifs sont ainsi écartés angulairement d'un angle de 90 degrés. Les pieds d'appui 61 permettent de maintenir le corps 38 du connecteur 22 au-dessus des bobines 19 sans que le corps 38 soit en contact avec les bobines 19. En outre, l'encombrement circonférentiel des pieds 19 est suffisamment faible pour éviter que l'interconnecteur 22 recouvre entièrement la périphérie externe des bobines 19, ce qui facilite le refroidissement du stator 11 du fait de la grande zone de dégagement entre deux pieds d'appui 61 successifs et de l'espace entre le corps 38 de l'interconnecteur 22 et les bobines 19.

Les formes des pions d'indexage 53 et des pieds d'appui 61 pourront être obtenues par moulage.

Dans un exemple non limitatif de réalisation, l'interconnecteur 22 comporte des cadres 31-34 réalisés en cuivre ayant des diamètres internes D1 de l'ordre de 198,5 mm et des diamètres externes D2 de l'ordre de 218,5 mm (cf. figure 3b). Ces cadres 31-34 sont séparés entre eux par une épaisseur E de matériau isolant de l'ordre de 1,6mm (cf. figure 6).

Par ailleurs, l'isolant 20 de bobine est réalisé en matière électriquement isolante par exemple en matière plastique telle que du PA 6.6, qui pourra être renforcé par des fibres, telles que des fibres de verre. Comme montré sur la figure 9, l'isolant de bobine 20 comporte un corps 201 formé par un cadre 202 ainsi qu'un rebord avant 203 et un rebord arrière 204 définissant avec les parois du cadre 202 une gorge de montage de la bobine 19, comme visible sur la figure 2b. Le rebord arrière 204, destiné à être positionné du côté de la culasse 17, est prolongé d'un côté par un talon 207; et de l'autre par une ailette 208 via une zone de pliage 209. Le talon 207 est moins épais et moins large que l'ailette 208. Le talon 207 permet de diminuer les chutes de tension entre la culasse 17 et la bobine 19 concernée.

L'isolant 20 de bobine comporte en outre des rainures 211 borgnes ménagées dans les faces internes des parois supérieure et inférieure du cadre 24. Le coté non débouchant des rainures 211 borgnes est situé du côté intérieur de la machine afin d'éviter que le vernis d'imprégnation ne coule à l'intérieur de la machine et ce au niveau de l'entrefer délimité par les extrémités libre des dents 14 et la périphérie externe du rotor de la machine.

De préférence, comme cela est représenté sur les figures 2b et 9, les bordures longitudinales du rebord avant 203 sont configurées à une de leurs extrémités 213 pour servir de guide fil pour chaque extrémité 191, 192 de la bobine 19. A cet effet, les bordures longitudinales du rebord 203 présentent à une extrémité la forme d'une cuvette recevant une extrémité du fil. Le fil de la bobine 19 pourra être maintenu en position pour le soudage du connecteur 22 en prenant appui sur les faces latérales de la cuvette.

Chaque rebord 203, 204 présente deux bordures longitudinales et deux bordures transversales reliant entre elles les bordures longitudinales de plus grande longueur. Le talon 207 et l'ailette 208 sont issus des bordures longitudinales du rebord arrière (Voir figure 9). Ainsi dans d'autres modes de réalisation l'ailette 208 pourra être fixée au moyen d'un système d'encliquetage avec la bordure longitudinale du rebord avant 203 située du côté de l'ailette 208. Le système d'encliquetage pourra être formé par des pattes portées par la bordure longitudinale du rebord avant 203. Ces pattes sont destinées à coopérer par encliquetage avec des fenêtres ménagées dans la paroi de l'ailette 208 et pourront présenter chacune la forme d'un crochet ayant un côté en forme de rampe triangulaire terminée par un rebord permettant de retenir l'ailette 208 après que la patte a traversé une fenêtre. La zone de pliage, le bord de l'ailette 208, situé du côté des fenêtres, est également aminci afin de permettre un plaquage optimal de l'ailette 208 contre le côté de la bobine.

Alternativement, le système d'encliquetage pourra être formé par une encoche ménagée dans l'épaisseur du rebord avant 203. Le bord libre de l'ailette 208 forme alors une languette destinée à s'insérer à l'intérieur de l'encoche pour maintenir l'ailette 208 rabattue contre le corps 23 de l'isolant 20. A cet effet, la partie de l'ailette 208 formant la languette pourra présenter une épaisseur amincie afin de faciliter le positionnement de la languette à l'intérieure de l'encoche et de garantir un bon plaquage de l'ailette 208 contre un côté latéral de la bobine 19.

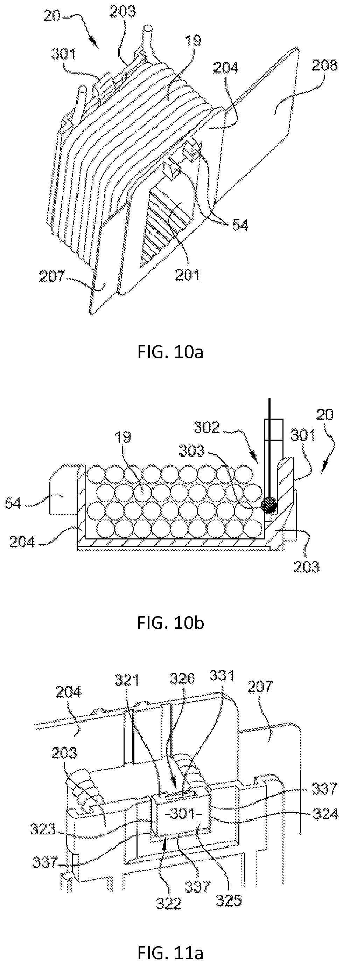

Selon l'invention l'un au moins des isolants 20 est configuré pour recevoir un capteur de température 303. Plus précisément, comme montré sur les figures 10a et 10b, cet isolant 20 spécifique comporte une patte 301 souple et creuse portée dans ce mode de réalisation par la bordure transversale supérieure du rebord avant 203. Cette patte 301 délimite un logement 302, bien visible sur la figure 10b, ouvert du côté de la bobine 19 et destiné à recevoir un capteur de température 303. Ce capteur 303 est relié, ici par des fils électriques visible à la figure 10b, à l'étage de commande et de contrôle de la machine (non représenté) apte à couper l'alimentation des bobines du stator 11 lorsqu'une surchauffe de la machine est détectée. L'étage de commande et de contrôle appartient à l'électronique de la machine électrique comportant également un étage de puissance doté d'un onduleur comme décrit par exemple dans le document EP 0 831 580 précité. Le capteur 303 de température est de préférence un capteur de type CTN (Coefficient de Température Négatif). Bien entendu en variante, on utilise un capteur 303 de type CTP (Coefficient de Température Positif), cela dépend des applications. Ces capteurs CTN et CTP sont des thermistances dont la résistance varie en fonction de la température.

La patte 301 exerce une action élastique contre le capteur 303 de manière à maintenir le capteur 303 en contact contre la bobine 19 et à éviter les mouvements du capteur 303. Un matériau de type résine peut être introduit dans le logement 302 pour améliorer le transfert de chaleur et l'isolation électrique entre le capteur 303 et la bobine. Cette résine fixe également le capteur 303.

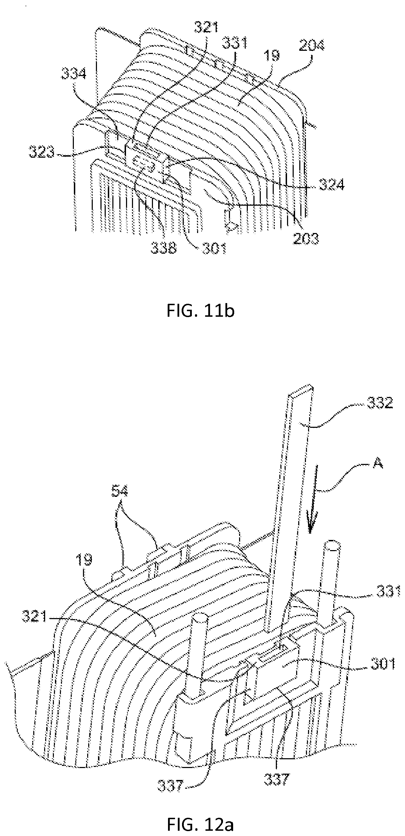

Comme montré sur les figures 11a et 11b, la patte 301 présente une forme sensiblement parallélépipédique. La patte 301 est ainsi délimitée par une face 321 horizontale supérieure située sensiblement au même niveau que le bord supérieur du rebord avant 203 et une face horizontale inférieure 322 opposée. La patte 301 présente également deux faces verticales 323 et 324 perpendiculaires au rebord avant 203 et deux autres faces verticales 325 et 326 reliant entre elles les faces 323 et 324. Le logement 302 de la patte 301 est situé du côté de la face 326.

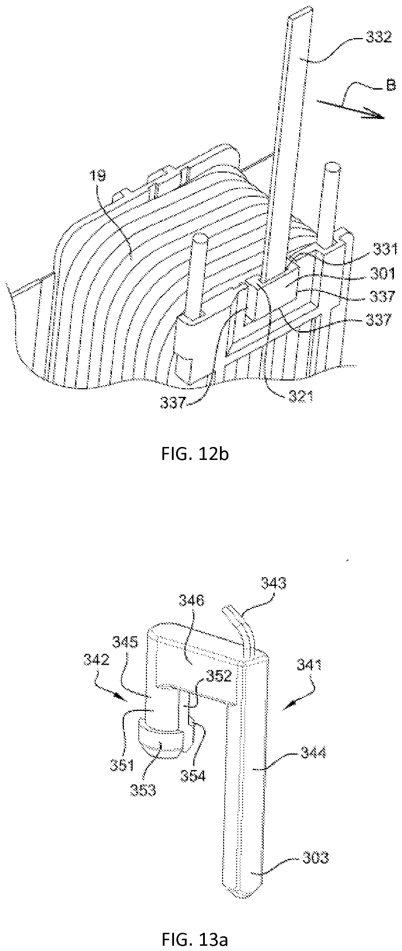

De préférence, la patte 301 comporte un trou 331 apte à recevoir un outil 332 de montage montré sur les figures 12a et 12b permettant d'écarter la patte 301 par rapport à la bobine pour l'implantation du capteur 303 de température dans le logement 302. L'outil pourra être un tournevis ou une lame comme visible dans ces figures 12a et 12 b. Le trou 331 qui s'étend sensiblement parallèlement au rebord avant 203 débouche du côté de la face 321 horizontale supérieure de la patte 301. Ce trou 331 est de préférence borgne afin de permettre un blocage axial de l'outil après insertion. En variante le trou 331 pourra être traversant. Sur les figures 12a et 12b, les flèches A et B montrent respectivement les déplacements de l'outil 332 lors de son insertion à l'intérieur du trou 331 et lors de l'écartement de la patte 301 pour installer le capteur 303 à l'intérieur du logement 302.

Comme cela est visible sur la figure 11b, la patte 301 est reliée élastiquement au rebord avant 203 par une bande 334 de matière d'épaisseur réduite. Cette bande 334 de matière s'étend entre les extrémités de la bordure transversale du rebord avant 203 et les faces verticales 323 et 324 de la patte 301 perpendiculaires au rebord avant 203. Cette bande 334 de matière présente une largeur sensiblement identique à celle de la patte 301. Grâce à cette disposition la patte 331 est souple et exerce une action élastique contre le capteur

En variante, pour obtenir l'effet élastique, des rainures 337 de faible profondeur visibles notamment sur les figures 11a, 12a et 12b sont ménagées autour de la patte 301. Ces rainures 337 sont réalisées le long des faces 323 et 324 verticales perpendiculaires au rebord avant 203 ainsi que le long de la face 322 horizontale inférieure.

Dans ces figures 11a, 12a et 12b il existe également une bande de matière comme à la figure 11b. Cette bande de matière est affectée par les rainures 337.

On appréciera que la bande de matière permet de réduire l'encombrement axial de la patte 331 par rapport au rebord 203, plus précisément par rapport à la bordure transversale supérieur du rebord 203.

Bien entendu en variante on pourra supprimer la bande de matière dans les figures 11a, 12a, 12b du fait de la présence des rainures 337. Avantageusement dans cette variante la patte 331 est raccordée au bord transversal supérieur du rebord avant par une zone d'enracinement délimitée par les deux rainures 337 et d'épaisseur inférieure à celle dudit rebord transversale.

En remplacement ou en complément du trou 331, la patte 301 comporte une protubérance 338 représentée en traits discontinus sur la figure 11b pour permettre un déplacement manuel de la patte 301 pour l'implantation du capteur 303 à l'intérieur du logement 302. Dans cette figure la protubérance s'étend en saillie axiale par rapport à la face 325 de la patte 301. Cette protubérance pourra consister en une saillie radiale, tel qu'une languette , par rapport à la bordure transversale supérieure du rebord avant 203 comme visible à la figure 10a. Cette protubérance 338' pourra être en variante trouée pour le passage de l'extrémité d'un crochet permettant de tirer la patte pour mise en place du capteur 303.

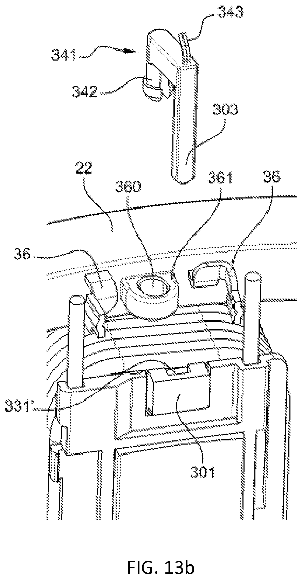

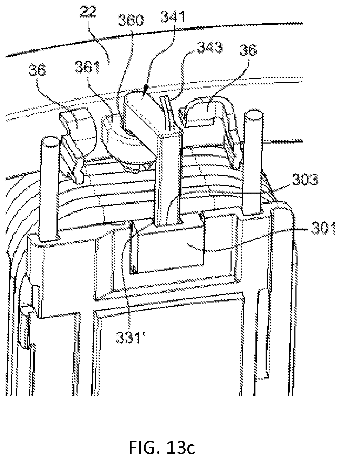

En variante l'outil est constitué par un support 341 électriquement isolant, de préférence en matière plastique moulable, portant le capteur 303, le trou étant configuré en conséquence pour recevoir le support 341. Plus précisément dans le mode de réalisation des figures 13a à 13b, on utilise un capteur 303 surmoulé sur un support 341 isolant équipé d'un système d'encliquetage 342. En variante le capteur 303 pourra être fixé par collage ou tout autre moyen sur le support 341. Comme montré sur les figures 13b et 13c, ce système 342 permet de fixer le support 341 sur le stator 11 via un élément 361 de maintien électriquement isolant porté par la périphérie interne de l'interconnecteur 22. La liaison du capteur 303 de température à l'étage de commande est effectuée par les fils référencés 343.

Plus précisément, le support 341 comporte une première branche 344 portant à son extrémité libre le capteur 302 et une deuxième branche 345 portant le système d'encliquetage 342, ces deux branches 344, 345 étant reliées l'une à l'autre par une troisième branche 346 dite branche de liaison. La première 344 et la deuxième 345 branches étant pliées du même côté par rapport à la branche de liaison 346, le support 341 présente globalement une forme en U avec une branche, à savoir celle 345 portant le système d'encliquetage 342, plus courte que l'autre branche 344 qui lui est parallèle. On notera que l'extrémité libre de la première branche 344 est chanfreinée (Figure 13a). Il en est de même des deux bords latéraux de la première branche globalement en forme de barre à section rectangulaire, qui pourra être de section carrée. En variante les quatre bords latéraux de la première branche pourront être chanfreinés.

Le système d'encliquetage 342 destiné à coopérer avec l'élément 361 de maintien comprend deux portions 351 et 352 terminées par deux collerettes 353 et 354 faisant saillie radialement. Ces portions 351, 352 sont légèrement espacées l'une de l'autre pour permettre leur déformation lors de l'insertion à l'intérieur d'une ouverture 360 délimitée par l'élément 361 de maintien porté par l'interconnecteur 22. A cet effet, l'ouverture 360 présente une dimension inférieure à un écart extérieur entre les collerettes 353 et 354. Les portions 351 et 352 présentent une extrémité chanfreinée pour faciliter leur insertion à l'intérieur de l'ouverture 360. Une fois engagées à l'intérieur de l'ouverture 360, les collerettes 352 et 354 retiennent axialement le support 341. L'ouverture 360 présente de préférence une forme oblongue afin de compenser les différentes tolérances au montage de l'interconnecteur 22 avec le stator 11 et faciliter ainsi la fixation du support 341 sur l'élément 361 de maintien. L'élément de maintien 361 est dans ce mode de réalisation en forme de patte saillante radialement vers l'intérieur et trouée en 360.

Comme cela est bien visible sur les figures 13b et 13c, un trou 331' ayant une forme sensiblement identique à celle du trou 331 est utilisé pour recevoir l'extrémité libre de la première branche 344 portant le capteur 303 de température. Le trou 331' peut être borgne ou traversant. A cet effet, l'extrémité de la branche 344 est de préférence chanfreinée comme cela est montré sur la figure 13a pour faciliter l'insertion du capteur 303 à l'intérieur du trou 331'. La déformation de la patte 301 lors de l'insertion de la branche 344 va permettre de garantir un bon plaquage du capteur 303 contre la bobine. On note que la zone de contact entre le capteur 303 et la patte 301 est sensiblement plane.

Dans ce mode de réalisation, il est également possible d'introduire de la résine à l'intérieur du trou 331' afin d'améliorer la conductivité thermique entre la bobine 19 et le capteur 303.

La hauteur de l'ensemble formé par le support et le capteur n'excède pas de préférence la hauteur de l'interconnecteur 22 de manière à obtenir un ensemble compact.

En variante, le support 341 est fixé sur un élément de maintien issu de la périphérie externe de l'interconnecteur 22.

Le support 341 est en matière électriquement isolante telle que de la matière plastique moulable, de préférence rigide. Il en est de même de l'élément 361 avantageusement venu de moulage avec le corps du connecteur 22 en matière plastique moulable. Le support 341 pourra être en PA 6.6.

On décrit ci-après une opération permettant d'obtenir le stator bobiné selon l'invention connecté à l'interconnecteur 22.

Dans un premier temps, les isolants 20 de bobine sont positionnés autour d'un outil externe. Le fil est ensuite enroulé autour de l'isolant 20 de bobine à l'intérieur de la gorge. Chaque isolant 20 de bobine est ensuite retiré de l'outil puis enfilé autour d'une dent 14 du stator 11. Comme montré sur la figure 2b, le talon 207 de chaque dent 14 est alors positionné de manière à être plaqué contre le fond d'une encoche 15 pour isoler efficacement les bobines 19 de la culasse 17. L'ailette 208 est rabattue vers la bobine 19 de manière à être maintenue repliée par un rebord avant d'un isolant 20 adjacent. L'ailette 208 constitue ainsi un mur électriquement isolant entre deux bobines 19 adjacentes.

L'interconnecteur 22 externe est ensuite positionné au-dessus des bobines 19 pour assurer une connexion des bobines 19 aux différents cadres 31-34 des phases U, V, W de la machine. L'interconnecteur 22 est positionné de sorte que les pieds 61 reposent sur un rebord de la culasse 17 via le support 62 et que les pions 53 d'indexage s'insèrent entre les protubérances 54 correspondantes des isolants 20 de bobine.

L'interconnecteur 22 est ensuite fixé sur le stator 11 par soudage des pattes 36 du cadre de neutre 31 et des cadres de phase 32-34 avec les extrémités 191, 192 des bobines. A cet effet, les entrées 191 des bobines 19 sont soudées alternativement aux pattes 36 des cadres de phase 32-34 correspondant aux phases U, V et W; tandis que les sorties 192 des bobines 19 sont soudées aux pattes 36 appartenant au cadre de neutre 31.

On effectue ensuite une opération d'imprégnation du bobinage du stator 11 par un vernis d'imprégnation. A cette fin, le stator 11 est chauffé ainsi que le vernis pour être introduit à l'état liquide goutte à goutte dans les rainures borgne 211. Le vernis est par exemple à base de résine époxy, de résine polyester non saturée ou de résine silicone. Bien entendu, de manière connue, on peut ajouter aux résines des accélérateurs pour diminuer la durée de l'imprégnation. On notera que les rainures borgnes 211 des parois inférieure et supérieure sont éloignées les unes des autres en fonction de l'épaisseur de la culasse 17. Ces rainures 43, non référencées à la figure 2b, ne sont pas masquées par la culasse 17.

Alternativement, l'opération d'imprégnation pourra être effectuée par passage successif, suivant un déplacement en rotation du stator 11, des bobines 19 à l'intérieur d'un bain contenant du vernis chaud. Ainsi en variante l'opération d'imprégnation pourra être réalisée par trempage partiel et roulage du stator dans un bain de vernis d'imprégnation. En variante l'opération d'imprégnation pourra être réalisée sous vide ou par trempage simple complet du stator dans un bain de vernis d'imprégnation. Dans tous les cas le vernis est refroidi en se polymérisant.

On note que le positionnement de l'interconnecteur 22 au-dessus des bobines 19 ainsi que ses dimensions réduites, en particulier celle du diamètre extérieur qui est inférieur à celui du stator 11, facilite le passage du vernis d'imprégnation de l'extérieur vers l'intérieur des bobines 19 via les rainures 211 borgnes.

En variante, on réalise l'opération d'imprégnation avant de souder l'interconnecteur 22 aux extrémités 191, 192 des bobines 19 du stator 11.

De préférence, l'ensemble formé par le stator 11 et l'interconnecteur 22 est ensuite monté à l'intérieur d'un carter par frettage, ce carter pouvant par exemple être refroidi par eau.

Dans le mode de réalisation des figures 11 et 12, l'outil 332 est inséré à l'intérieur du trou 331 suivant la flèche A. L'extrémité de l'outil étant en butée contre le fond du trou borgne 331, l'outil 332 est ensuite incliné suivant la flèche B dans une direction éloignée par rapport à l'interconnecteur 22 afin d'écarter la patte 301 par rapport à la bobine. Le capteur 303 de température est ensuite implanté à l'intérieur du logement 302. L'outil 332 de montage peut prendre la forme d'une tige allongée ayant une forme complémentaire du trou ou d'un tournevis.

Le cas échéant, de la résine améliorant la conductivité thermique est introduite à l'intérieur du logement 302. Une fois le capteur 303 positionné, l'outil 332 est dégagé du trou 331 de sorte que la patte 301 revient élastiquement dans sa position initiale de manière à assurer un plaquage du capteur 303 contre la bobine 19.

Dans le mode de réalisation des figures 13a à 13c, l'extrémité libre chanfreinée de la première branche 344 portant le capteur 303 est insérée à l'intérieur du trou 331', tandis que le support 341 est fixé à l'interconnecteur 22 en faisant coopérer le système d'encliquetage 342 avec l'élément 361 de maintien.

A cet effet, le système d'encliquetage 342 est inséré verticalement à l'intérieur de l'ouverture oblongue 360 via les portions 351 et 352 chanfreinées à leur extrémité. Lors de l'insertion, les portions 351 et 352 se rapprochent élastiquement pour reprendre leur configuration initiale après que les collerettes 352 et 354 ont traversé l'ouverture 360. Le support 341 du capteur 303 est alors maintenu axialement et radialement par l'élément de maintien 361.

La déformation de la patte 301 lors de l'insertion de l'extrémité de la branche 344 permet de garantir un bon plaquage du capteur 303 contre la bobine 19 suivant une zone de contact sensiblement plane. Le support 341 remplace l'outil 332.

Dans le mode de réalisation de la figure 10a on écarte manuellement la patte à l'aide de la saillie pour insérer le capteur 303.

Ainsi qu'il ressort à l'évidence de la description et des dessins le capteur 303 peut être monté avant ou après l'opération d'imprégnation permettant de fixer les isolants 20 via le vernis d'imprégnation sur les dents 14 et soudage des pattes 36 sur les extrémités 191, 192 des bobines. Lorsque le capteur est monté après l'opération d'imprégnation il faut mettre un papier dans le logement 302, que l'on enlève par la suite, pour que ce logement ne soit pas bouché par le vernis. La patte souple 301, déplaçable manuellement ou à l'aide d'un outil, est positionnée entre les deux pattes de soudage 36 et les deux extrémités 191, 192 concernées.

Ainsi qu'il ressort de la description et des dessins, les ailettes 208, qui constituent un mur électriquement isolant entre deux bobines 19 consécutives, sont issues de l'isolant 20, ici en matière plastique moulable, en sorte que la fabrication de l'isolant 20, avantageusement équipé d'un talon 207, est aisée. Le montage de l'isolant 20 sur sa dent associée 14 et le soudage des extrémités 191, 192 est également aisé grâce à la configuration de l'isolant 20 avantageusement configuré pour guider les extrémités 191, 192 de la bobine 19. Le vernis d'imprégnation permet une bonne fixation de la bobine sur sa dent 14 associée grâce aux rainures 211, qui sont borgnes pour éviter de polluer l'entrefer entre le stator et le rotor de la machine électrique. La culasse 17 est dans cet exemple de réalisation de forme annulaire et constitue un support pour les dents 14 s'étendant vers l'intérieur en direction de l'axe X. Les dents 14 sont réparties circonférentiellement de manière régulière et de manière connue un entrefer existe entre les extrémités libres des dents 14 et la périphérie externe du rotor de la machine électrique tournante. Cet entrefer ne sera pas pollué par le vernis d'imprégnation. Les talons 207 permettent d'augmenter la puissance de la machine électrique. Les ailettes 208 permettent d'augmenter également la puissance de la machine électrique tout en rendant celle-ci plus fiable et compacte.

On appréciera que le capteur de température permet d'interrompre le circuit électrique de bobines en cas de température excessives. Ce capteur, via la patte 301 souple et creuse, est positionné de manière adjacente à la bobine concernée. Ce positionnement optimum est maintenu lors de la durée de vie de la machine. La patte 301 prévient tout mouvement du capteur et offre un logement de faible volume au capteur. Cette patte 301 est obtenue aisément par moulage avec l'isolant 20 concerné.

Le rotor de la machine électrique pourra être un rotor à griffes comme dans le document FR 2 890 798. En variante le rotor pourra être à pôles saillants. En variante le rotor pourra être un rotor à aimants permanents comme dans les documents EP 0 803 962 et EP 0 831 580 précités. En variante le rotor à griffes ou à pôles saillants pourra comporter également des aimants permanents. En variante les dents 14 pourront ne pas être réparties circonférentiellement de manière régulière.

L'homme du métier pourra bien entendu modifier la configuration de l'interconnecteur 22 précédemment décrit sans sortir du cadre de l'invention. Ainsi notamment, le stator 11 pourra présenter en variante un bobinage quadriphasé, pentaphasé, voire même hexaphasé. Dans ce cas, l'interconnecteur 22 comporte respectivement 5, 6, 7 cadres empilés les uns sur les autres, le cadre externe constituant le point neutre.

Dans le mode de réalisation de la figure 9, l'ailette 208 est destinée à être pliée et laissée libre. Dans ce cas, lorsque les isolants 20 de bobine sont montés sur les dents 14, l'ailette 208 d'un isolant 20 donné prend appui contre un rebord avant 203 d'un isolant de bobine 20 adjacent.

La machine électrique tournante pourra appartenir à un véhicule automobile et être de manière précitée un alternateur, un alterno-démarreur qui est un alternateur réversible, un moteur électrique ou un ralentisseur électromagnétique.

Selon un mode de réalisation d'une machine électrique tournante, le rotor et le stator décrits ci avant jouent respectivement le rôle d'inducteur et d'induit. Ainsi, le courant qui traverse le rotor le polarise et le champ magnétique tournant dans le stator y génère un courant induit.

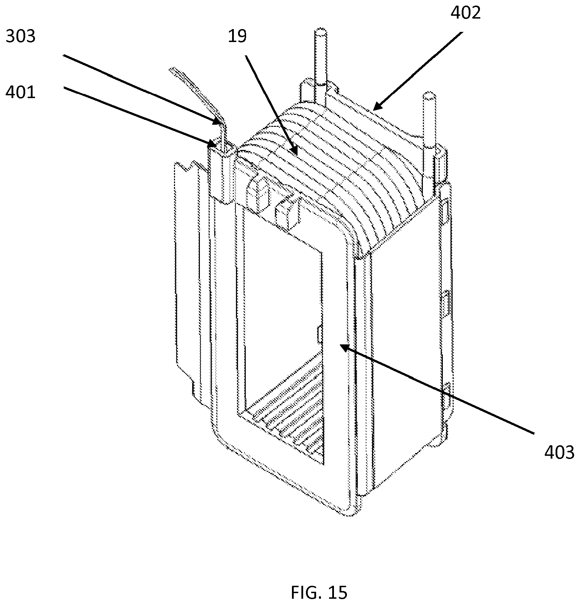

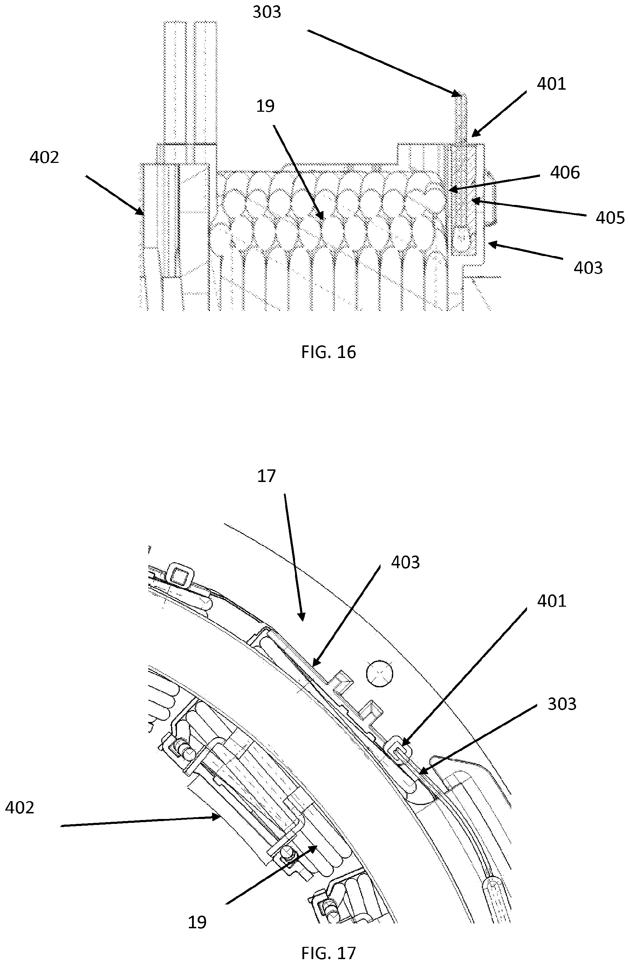

Selon un autre mode de réalisation d'une machine électrique tournante, le rotor et le stator décrits ci avant jouent respectivement le rôle d'induit et d'inducteur. Ce cas est illustré notamment dans les figures 15 et 16 de la demande de brevet FR 2 918 512. Par exemple dans le cas d'un ralentisseur électromagnétique illustré sur la figure 15 de la demande de brevet précitée, le courant qui traverse le stator va polariser le stator et un courant induit va être généré dans le rotor soumis à ce champ magnétique.

Le connecteur pourra être plat comme décrit dans le document FR 2 918 512.

Dans le cadre d'un alternateur appartenant à un prolongateur d'autonomie d'un véhicule électrique (Range-extender en Anglais) le rotor pourra être un rotor à aimants permanents avec plusieurs aimants par logement soumis à l'action d'un ressort comme décrit dans la demande FR 12/54733 déposée le 24/05/2012. On appréciera que ce type de machine est réversible, compacte axialement tout en étant d'une grande puissance.

Bien entendu l'isolant 20, qui est ici rigide, pourra être en variante dépourvu d'ailette et/ou de talon. Le nombre de bobines 19 dépend des applications et peut donc être inférieur ou supérieur à 15.

En variante on pourra inverser les structures, la patte souple 301 étant portée par la bordure transversale supérieure du rebord arrière 204, tandis que l'élément de maintien 361 est porté par la périphérie externe de l'interconnecteur 22. Le capteur pourra être mis en place avant le soudage des pattes 36 du connecteur aux extrémités 191, 192 de la bobine concernée et avant l'opération d'imprégnation. En variante le capteur pourra être mis en place après le soudage des pattes 36 du connecteur aux extrémités 191, 192 de la bobine concernée et après l'opération d'imprégnation. Le nombre d'isolant 20 équipé de pattes 301 peut être plus grand que 1. En effet pour des questions de standardisation il peut être souhaitable d'avoir plusieurs isolants, voir tous les isolants, équipés de pattes 301 pour pouvoir avoir plusieurs positions pour l'implantation du capteur 303.

Bien entendu le connecteur 22 pourra avoir une autre forme, par exemple les cadres 31-34 pourront être concentriques.

Dans les figures 13a à 13c la patte 301 est implantée entre les deux extrémités 191, 192 de la bobine 19 concernée en étant localisée centralement par rapport à la bordure transversale supérieure du rebord avant 203. En variante cette patte 301 pourra être localisée centralement par rapport à la bordure transversale supérieure du rebord arrière 204. Il en est de même du système d'encliquetage 361 en vis-à-vis de la patte 301 comme visible dans les figures 13b, 13c.

Bien entendu cette patte 301 pourra être décalée circonférentiellement dans un sens ou dans l'autre. Il en est de même du système d'encliquetage 361 en vis-à-vis de la patte 301 comme visible dans les figures 13b, 13c.

La patte 301, en variante, pourra être portée par la bordure transversale inférieure du rebord avant 203 ou du rebord arrière 204 en étant localisée centralement par rapport à cette bordure transversale inférieure. Bien entendu cette patte 301 pourra être décalée circonférentiellement dans un sens ou dans l'autre. Il en est de même du système d'encliquetage 361.

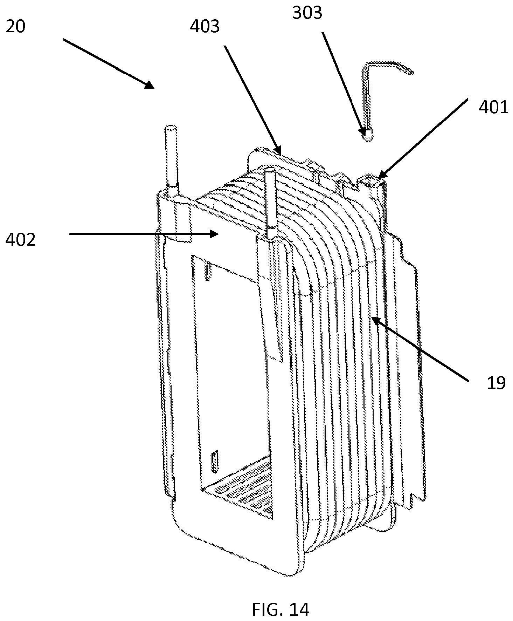

Sur la figure 14, on peut voir un isolant de bobine 20 en vue de face, c'est-à-dire un isolant dont la face interne 402 située du côté de l'axe X1 fait face. Cet isolant 20 est muni d'un bobinage 19. L'isolant comprend une face externe 403 située du côté opposée à la face interne 402. La face externe est munie d'une cavité 401 qui est aménagée sur un des rebords de l'isolant de bobine. Par exemple la cavité est issue de matière du rebord de l'isolant de bobine situé du côté de la face externe 403.

La cavité 401 est destinée à recevoir le capteur de température 303. Sur la figure 14, le logement 401 de l'isolant 20 n'est pas encore pourvu du capteur de température 303 qui est représenté à côté. La cavité 401 telle que représentée sur la figure 14 est remplie de résine et/ou de colle avant de recevoir le capteur 303.

Sur la figure 15, on peut l'isolant de bobine 20 est en vue de dos, c'est-à-dire que la face interne 402 de l'isolant 20 située du côté de l'axe X1 est située à l'arrière. Sur la figure 15 le capteur de température 303 est inséré dans la cavité 401 au sein de la colle et/ou de la résine dont la cavité était préalablement remplie.

Sur la figure 16, est représentée plus en détail la cavité 401 munie du capteur de température 303. La cavité est munie de parois qui sont rigides. Les parois de la cavité 401 et notamment la paroi 406 forment une barrière électrique pour isoler électriquement le capteur 303 de température de l'enroulement 19 du stator.

La cavité 401 est remplie de résine ou de colle avant de recevoir le capteur 303. Ainsi après séchage, le capteur est bien maintenu et positionné. En effet, comme on peut voir la colle ou la résine séchée, référencée 405 sur la figure 16, épouse parfaitement le vide de matière entre la cavité 401 et le capteur de température 303.

Sur la figure 17, est représenté en vue de dessus, l'isolant bobine 20 et ses périphérie externe 403 et interne 402. La périphérie interne 402 est située du côté de l'axe X1. La cavité 401 est aménagée sur la périphérie externe 403 de l'isolant 20 de bobine 19.

Alternativement, il est prévu que ladite cavité 401 de l'isolant de bobine est aménagée sur un des rebords de la périphérie interne 402 de l'isolant de bobine. Cela permet de s'éloigner du circuit de refroidissement du corps de stator.

## Revendications

1. Isolant de bobine (20) destiné à être positionné autour d'une dent (14) d'un stator d'une machine électrique, cet isolant de bobine ayant un corps (201) comportant des parois formant un cadre (202) ainsi qu'un rebord avant (203) et un rebord arrière (204) définissant avec des parois du cadre (202) une gorge de montage pour l'enroulement d'une bobine (19), **caractérisé en ce que** l'isolant comporte une patte (301) souple creuse portée par un des rebords de l'isolant de bobine, cette patte (301) délimitant un logement (302, 331') destiné à recevoir un capteur (303) de température, la patte (301) exerçant une action élastique contre le capteur (303) de température de manière à le maintenir en contact avec la bobine.

2. Isolant selon la revendication 1, **caractérisé en ce que** la patte (301) est reliée élastiquement au rebord (203, 204) par une bande (334) de matière d'épaisseur réduite comparée à l'épaisseur du rebord (203, 204) .

3. Isolant selon l'une des revendications 1 à 2, **caractérisé en ce que** des rainures (337) sont ménagées autour de la patte (301).

4. Isolant selon l'une des revendications 1 à 3, **caractérisé en ce que** la patte comporte un trou (331) apte à recevoir un outil permettant d'écarter la patte (301) de la bobine pour l'implantation du capteur (303) de température dans le logement (302).

5. Isolant selon la revendication 4, **caractérisé en ce que** le trou (331) est borgne.

6. Isolant selon l'une des revendications 1 à 5, **caractérisé en ce que** la patte (301) comporte un trou (331') destiné à recevoir le capteur (303) de température surmoulé sur un support (341) apte à être fixé sur le stator.

7. Isolant selon l'une des revendications 1 à 6, **caractérisé en ce que** la patte (301) comporte une protubérance (338) pour permettre un déplacement manuel de ladite patte (301).

8. Isolant selon l'une des revendications 1 à 7, **caractérisé en ce qu'**il comporte en outre au moins une ailette (208) pliable par rapport au corps (201) apte à assurer une isolation **électrique** entre deux bobines (19) montées sur deux dents (14) adjacentes, cette ailette (208) étant située dans le prolongement d'un des rebords (203, 204).

9. Isolant de bobine selon l'une des revendications 1 à 8, **caractérisé en ce que** le rebord avant (203) comporte deux bordures longitudinales configurées chacune à une de leurs extrémités (213) pour assurer un guidage d'une extrémité (191, 192) d'un fil de la bobine.

10. Isolant de bobine selon l'une des revendications 1 à 9, **caractérisé en ce qu'**il comporte en outre un talon (207) situé dans le prolongement du rebord arrière (204) destiné à être plaqué contre un fond d'une encoche (15) du stator.

## Patentansprüche

1. Spulenisolierer (20), der zur Positionierung um einen Zahn (14) eines Stators einer elektrischen Maschine bestimmt ist, wobei dieser Spulenisolierer einen Körper (201) hat, der Wände, die einen Rahmen (202) bilden, sowie eine vordere Randleiste (203) und eine hintere Randleiste (204) aufweist, die mit Wänden des Rahmens (202) einen Montagekanal zum Wickeln einer Spule (19) definieren, **dadurch gekennzeichnet, dass** der Isolierer eine flexible hohle Lasche (301) aufweist, die von einer der Randleisten des Spulenisolierers getragen wird, wobei diese Lasche (301) eine Aufnahme (302, 331') begrenzt, die zum Aufnehmen eines Temperatursensors (303) bestimmt ist, wobei die Lasche (301) eine elastische Kraft gegen den Temperatursensor (303) ausübt, um diesen mit der Spule in Kontakt zu halten.

2. Isolierer nach Anspruch 1, **dadurch gekennzeichnet, dass** die Lasche (301) mittels eines Bands (334) aus einem Material mit im Vergleich zu der Dicke der Randleiste (203, 204) reduzierter Dicke elastisch mit der Randleiste (203, 204) verbunden ist.

3. Isolierer nach einem der Ansprüche 1 bis 2, **dadurch gekennzeichnet, dass** Nuten (337) um die Lasche (301) herum ausgeführt sind.

4. Isolierer nach einem der Ansprüche 1 bis 3, **dadurch gekennzeichnet, dass** die Lasche ein Loch (331) aufweist, das ein Werkzeug aufnehmen kann, dank dessen die Lasche (301) zum Einbau des Temperatursensors (303) in der Aufnahme (302) von der Spule beabstandet werden kann.

5. Isolierer nach Anspruch 4, **dadurch gekennzeichnet, dass** das Loch (331) ein Sackloch ist.

6. Isolierer nach einem der Ansprüche 1 bis 5, **dadurch gekennzeichnet, dass** die Lasche (301) ein Loch (331') aufweist, das zur Aufnahme des Temperatursensors (303) bestimmt ist, der an eine Stütze (341) angespritzt ist, die an dem Stator befestigt werden kann.

7. Isolierer nach einem der Ansprüche 1 bis 6, **dadurch gekennzeichnet, dass** die Lasche (301) einen Vorsprung (338) aufweist, um ein manuelles Bewegen der Lasche (301) zu gestatten.

8. Isolierer nach einem der Ansprüche 1 bis 7, **dadurch gekennzeichnet, dass** er ferner mindestens eine Rippe (208) aufweist, die bezüglich des Körpers (201) biegsam ist und eine elektrische Isolierung zwischen zwei an zwei benachbarten Zähnen (14) montierten Spulen (19) gewährleisten kann, wobei diese Rippe (208) in der Verlängerung einer der Randleisten (203, 204) angeordnet ist.

9. Spulenisolierer nach einem der Ansprüche 1 bis 8, **dadurch gekennzeichnet, dass** die vordere Randleiste (203) zwei Längsränder aufweist, die jeweils an einem ihrer Enden (213) dazu ausgestaltet sind, eine Führung eines Endes (191, 192) eines Drahts der Spule zu gewährleisten.

10. Spulenisolierer nach einem der Ansprüche 1 bis 9, **dadurch gekennzeichnet, dass** er ferner eine Nase (207) aufweist, die in der Verlängerung der hinteren Randleiste (204) angeordnet und dazu bestimmt ist, gegen einen Boden einer Kerbe (15) des Stators gepresst zu werden.

## Claims

1. Coil insulator (20) that is intended to be positioned around a tooth (14) of a stator of an electric machine, this coil insulator having a body (201) comprising walls forming a frame (202) and also a front flange (203) and a rear flange (204) defining, with walls of the frame (202), a mounting channel for winding a coil (19), **characterized in that** the insulator comprises a hollow flexible tab (301) that is borne by one of the flanges of the coil insulator, this tab (301) delimiting a recess (302, 331') that is intended to accommodate a temperature sensor (303), the tab (301) exerting an elastic force on the temperature sensor (303) so as to keep it in contact with the coil.

2. Insulator according to Claim 1, **characterized in that** the tab (301) is elastically connected to the flange (203, 204) by a strip (334) of material of low thickness in comparison with the thickness of the flange (203, 204).

3. Insulator according to one of Claims 1 and 2, **characterized in that** grooves (337) are formed around the tab (301).

4. Insulator according to one of Claims 1 to 3, **characterized in that** the tab comprises a hole (331) that is able to accommodate a tool allowing the tab (301) to be moved away from the coil so as to insert the temperature sensor (303) into the recess (302).

5. Insulator according to Claim 4, **characterized in that** the hole (331) is blind.

6. Insulator according to one of Claims 1 to 5, **characterized in that** the tab (301) comprises a hole (331') that is intended to accommodate the temperature sensor (303), which is overmoulded onto a holder (341) that is able to be attached to the stator.

7. Insulator according to one of Claims 1 to 6, **characterized in that** the tab (301) comprises a protuberance (338) so as to allow said tab (301) to be moved manually.

8. Insulator according to one of Claims 1 to 7, **characterized in that** it further comprises at least one fin (208) that can be folded relative to the body (201), which is able to provide **electrical** insulation between two coils (19) that are mounted on two adjacent teeth (14), this fin (208) being located in the extension of one of the flanges (203, 204) .

9. Coil insulator according to one of Claims 1 to 8, **characterized in that** the front flange (203) comprises two longitudinal edges that are each configured, at one of their ends (213), to guide an end (191, 192) of a wire of the coil.

10. Coil insulator according to one of Claims 1 to 9, **characterized in that** it further comprises a heel (207) that is located in the extension of the rear flange (204), which is intended to be pressed against a bottom of a slot (15) of the stator.
